(19) Europäisches Patentamt
European Patent Office
Office européen des brevets

(11) Publication number : **0 334 326 B1**

# (12) EUROPEAN PATENT SPECIFICATION

(45) Date of publication of patent specification :
**15.07.92 Bulletin 92/29**

(51) Int. Cl.⁵ : **B62D 55/24,** B62D 55/20

(21) Application number : **89105143.5**

(22) Date of filing : **22.03.89**

(54) **Endless rubber track.**

(30) Priority : **25.03.88 JP 39416/88 U**

(43) Date of publication of application :
**27.09.89 Bulletin 89/39**

(45) Publication of the grant of the patent :
**15.07.92 Bulletin 92/29**

(84) Designated Contracting States :
**DE FR GB IT**

(56) References cited :
**DE-A- 3 523 528**

(73) Proprietor : **Bridgestone Corporation**
**1-1, Kyobashi 1-Chome Cyuo-Ku**
**Tokyo 104 (JP)**

(72) Inventor : **Furuta, Noriaki**
**18-27 Okanocho 1-chome Nishi-ku**
**Yokohama-shi Kanagawa-ken (JP)**

(74) Representative : **Huss, Carl-Hans, Dipl.-Ing.**
**Patentanwalt Griesstrasse 3 a Postfach 14 54**
**W-8100 Garmisch-Partenkirchen (DE)**

EP 0 334 326 B1

## Description

(Field of Invention)

The present invention relates to endless rubber tracks adopted to combines and the like, and more specifically to an endless rubber track in which cores are embedded in the rubber material of said endless rubber track, and a pair of guide rails, on which track rollers roll, are formed on said cores.

(Description of the Prior Art)

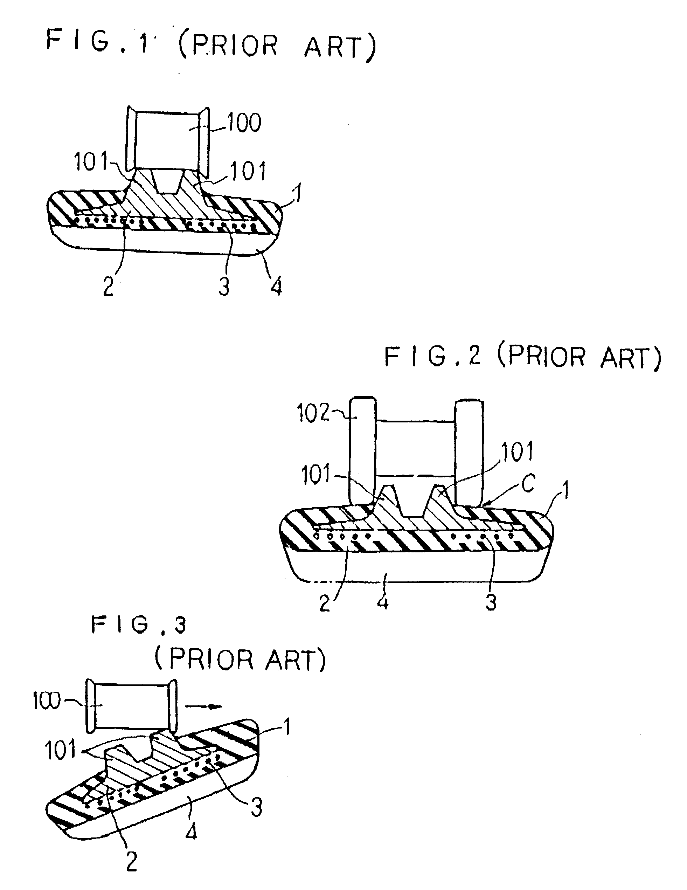

Concerning conventional endless rubber tracks, generally known is, as shown in Fig. 1, the type that many cores 2 are embedded perpendicularly to the longitudinal direction of an endless rubber track 1 made of rubber material. Reinforcing members 3 are embedded between the core 2 and the lower part of the endless rubber track 1. Further is provided a lug 4 on the surface with which the endless rubber track 1 comes in contact with the ground and also a pair of guide rails 101, on which track rollers 100 roll, protrude upwardly from said core 2 to the opposite side of the surface with which the endless rubber track 1 comes in contact with the ground.

In case of the conventional type of endless rubber tracks shown in Fig. 1, the track rollers 100 roll on said pair of guide rails 101. Also, generally known is another type according to Fig. 3 with track rollers 102 rolling on the outer planes of the respective guide rails 101.

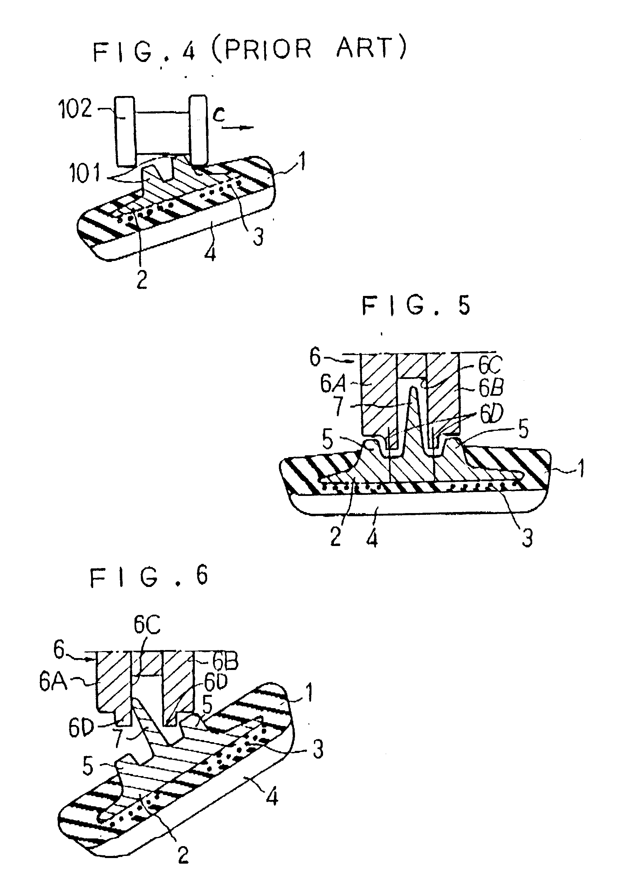

The conventional type shown in Fig. 1 has a weak point that, when the endless rubber track travels obliquely on the slope, a gap occurs in the direction of the arrow in Fig. 3, causing the track rollers 100 to run off the endless rubber track. In addition, the other conventional type shown in Fig. 2 has also one weak point that the track rollers 102 run off the endless rubber track as indicated in Fig. 4. Furthermore, in case of the example shown in Fig. 2, on the section of the endless rubber track on which the track rollers 102 run, i.e., on the surface made of rubber material shown with an arrow C of said Figure, the so-called athlete's foot phenomenon (or wear) occurs, which is likely to cause the adhered part between the cores 2 and the rubber material of the endless rubber track 1 to come off.

(Summary of the invention)

It is, therefore, the object of the present invention to prevent a track roller from running off an endless rubber track and to provide an endless rubber track which prevents the so-called athlete's foot phenomenon.

The above objects are attained by providing a guide protrusion between a pair of guide rails so as to get said guide protrusion into the inside of the track roller.

In the present invention, when the endless rubber track is about to run off the guide rails while traveling obliquely on the slope, the guide protrusion getting into the inside of the track roller prevents the track rollers from running off. Moreover, as two wheels on both sides of the track roller run on the respective guide rails, the so-called athlete's foot phenomenon does not occur.

(Brief description of the drawings)

Figs. 1 and 2 illustrate cross-sectional views of conventional types of endless rubber tracks respectively.

Figs. 3 and 4 are cross-sectional views showing the state that endless rubber tracks of conventional types are running obliquely on the slope respectively.

Fig. 5 is a cross-sectional view of a preferred embodiment of the present invention; and

Fig. 6 is a cross-sectional view showing the state that the endless rubber track of Fig. 5 is running obliquely on the slope.

(Detailed description of the preferred embodiments)

A preferred embodiment of the present invention will now be described in the following with reference to the accompanying drawings Figs. 5 and 6.

The embodiments of the present invention are similar in structure to the examples of conventional endless rubber tracks in that a plurality of cores 2 are embedded perpendicularly to the longitudinal direction of an endless rubber track 1 made of rubber material; reinforcing members 3 are embedded under the core 2; a lug 4 is provided on the surface, with which the endless rubber track 1 comes in contact with the ground; and also a pair of guide rails 5 protrude upwardly from said core to the opposite side of the surface with which the endless rubber track 1 comes in contact with the ground.

The track roller 6 has two wheels 6A and 6B each rolling on the respective guide rails, and a space 6C is provided between the wheels 6A and 6B. Also, roller flanges 6D are each provided facing each other on the wheels 6A and 6B where they come in contact with the respective guide rails 5. And a guide protrusion 7 which gets into the space 6C of the track roller 6 is provided between the pair of guide rails 5 formed on the core 2. Under the condition that the track roller 6 rolls on the endless rubber track as mentioned above, the roller flanges 6D of the two wheels 6A and 6B get into the respective concaves situated between the pair of guide rails 5 and the guide protrusion 7. In addition, the guide protrusion 7 gets, at the same time, into the inside, i.e., the space 6C of the track roller 6.

In case the endless rubber track tilts while traveling obliquely on the slope, the guide protrusion 7 inside of the track roller 6, as shown in Fig. 6, keeps the track roller 6 from running off the guide rails 5.

As described above, the present invention makes possible the following respects: The guide protrusion 7, which gets into the inside of the track roller 6, is provided between the pair of the guide rails 5. Thus, the track roller 6 rolls on the pair of guide rails 5, so the so-called athlete's foot phenomenon does not occur. Moreover, even when the endless rubber track travels obliquely on the slope, the guide protrusion 7 has already entered inside the track roller 6. Therefore, this prevents the track roller 6 from running off the endless rubber track.

## Claims

1. An endless rubber track, comprising:

a plurality of cores (2) embedded perpendicularly to the longitudinal direction of an endless rubber track (1) made of rubber material;

a pair of guide rails (5) on which a track roller (6) rolls, said pair of guide rails being formed on each one of said cores and protruding upwardly therefrom to the opposite side of the surface with which the endless rubber track comes in contact with the ground; and

a guide protrusion (7), which gets into the inside of the track roller, and which is provided between said pair of guide rails.

## Patentansprüche

1. Endlose Gummiraupenkette bestehend aus

einer Vielzahl von rechtwinklig zur Längsrichtung der Kette (1) eingebetteten Einlagen (2);

einem Paar Führungsschienen (5), auf denen eine Kettenrolle abrollt und auf jeder Seite einer Einlage so angeordnet, daß jede Schiene entgegengesetzt zu der Fläche absteht, mit der die endlose Raupenkette in Berührung mit dem befahrenen Boden kommt; und

einer Führungsrippe (7), die in das Innere einer Raupenrolle hineinreicht und zwischen dem Paar Führungsschienen liegt.

## Revendications

1. Chenille en caoutchouc comportant :

une pluralité de noyaux (2) inclus perpendiculairement au sens longitudinal d'une chenille en caoutchouc (1) faite de matériau caoutchouteux ;

une paire de rails de guidage (5) sur lesquels roule un galet de roulement (6), ladite paire de rails de guidage étant formée sur chacun desdits noyaux et faisant saillie vers le haut à partir de ceux-ci vers le côté opposé à la surface par laquelle la chenille en caoutchouc vient en contact avec le sol ;

et une saillie de guidage (7), qui s'introduit à l'intérieur du galet de guidage, et qui est prévue entre ladite paire de rails de guidage.

EP 0 334 326 B1

FIG.1 (PRIOR ART)

FIG.2 (PRIOR ART)

FIG.3
(PRIOR ART)

4

FIG. 4 (PRIOR ART)

FIG. 5

FIG. 6